# EUROPÄISCHE PATENTSCHRIFT

(11) **EP 1 075 368 B1**
(45) Veröffentlichungstag und Bekanntmachung des Hinweises auf die Patenterteilung: **11.09.2002**
(21) Anmeldenummer: 99917678.7
(22) Anmeldetag: 22.04.1999
(51) Int. Cl.: B29B 9/06, B29B 17/00, B29C 47/38

(54) **VORRICHTUNG UND VERFAHREN ZUM KONTINUIERLICHEN AGGLOMERIEREN VON KUNSTSTOFFGUT, INSBESONDERE ZU RECYCLINGZWECKEN**
DEVICE AND METHOD FOR CONTINUOUSLY AGGLOMERATING PLASTIC MATERIAL, ESPECIALLY FOR RECYCLING PURPOSES
DISPOSITIF ET PROCEDE POUR L'AGGLOMERATION EN CONTINU DE PRODUITS EN MATIERE PLASTIQUE, NOTAMMENT A DES FINS DE RECYCLAGE

(30) Priorität: 06.05.1998 AT 74898
(43) Veröffentlichungstag der Anmeldung: 14.02.2001
(73) Patentinhaber: BACHER, Helmut, A-4490 St. Florian (AT); SCHULZ, Helmuth, A-4490 St. Florian (AT); WENDELIN, Georg, A-4033 Linz (AT)
(72) Erfinder: BACHER, Helmut, A-4490 St. Florian (AT); SCHULZ, Helmuth, A-4490 St. Florian (AT); WENDELIN, Georg, A-4033 Linz (AT)
(74) Vertreter: Wildhack, Helmut, Dipl.-Ing. Dr.
(86) Internationale Anmeldenummer: AT9900100
(87) Internationale Veröffentlichungsnummer: WO99056924

(56) Entgegenhaltungen:
- EP-A- 0 578 603
- EP-A- 0 735 945
- WO-A-93/15892
- US-A- 3 942 774
- US-A- 4 981 364
- PATENT ABSTRACTS OF JAPAN vol. 095, no. 011, 26. Dezember 1995 & JP 07 214548 A (PLACO CO LTD), 15. August 1995
- PATENT ABSTRACTS OF JAPAN vol. 011, no. 158 (M-591), 22. Mai 1987 & JP 61 290028 A (ISHIKAWAJIMA HARIMA HEAVY IND CO LTD), 20. Dezember 1986

## Beschreibung

Die Erfindung bezieht sich auf eine Vorrichtung zum kontinuierlichen Agglomerieren von Kunststoffgut, insbesondere zu Recyclingzwecken, mit einer in einem Gehäuse gelagerten, durch einen Antrieb zu einer Drehbewegung um ihre Achse angetriebenen Agglomerierschnecke, welche das Kunststoffgut lediglich zusammenbackt, aber nicht plastifiziert, und der das zu behandelnde Gut durch eine Einbringeöffnung des Gehäuses zugeführt wird und die das agglomerierte Gut durch eine Austrittsöffnung aus dem Gehäuse ausdrückt, wobei das Verhältnis von wirksamer Länge der Agglomerierschnecke zu ihrem Nenndurchmesser kleiner ist als 16. Als "wirksame Länge" der Agglomerierschnecke ist hiebei stets jener Abschnitt derselben zu verstehen, welcher zwischen dem der Austrittsöffnung benachbarten Rand der Einbringeöffnung und der ihr am nächsten liegenden Austrittsöffnung liegt.

Die allgemein bekannten Agglomeriervorrichtungen der eingangs beschriebenen Art haben einen von der Agglomerierschnecke und ihrem Gehäuse gebildeten Extruder, dessen wirksame Länge wesentlich kürzer ist als bei üblichen Kunststoffextrudern auf dem Recyclinggebiet, bei denen das Verhältnis von wirksamer Extruderschneckenlänge zum Schneckendurchmesser wesentlich größer ist als 16, zumeist 25 bis 35, und bei denen eine Plastifizierung des Kunststoffgutes stattfindet. Zum Unterschied von solchen Plastifiziervorrichtungen wird bei einer Agglomeriervorrichtung dem zu behandelnden Kunststoffgut, das in vorzerkleinerter Form in die Einbringeöffnung des Gehäuses der Agglomerierschnecke eingebracht wird, nur soviel Energie zugeführt, dass das Kunststoffmaterial lediglich zusammenbackt, aber nicht plastifiziert wird. Es findet also gleichsam ein Haften der einzelnen Kunststoffteilchen aneinander bzw. eine Sinterung des Kunststoffmateriales statt. Das so agglomerierte Kunststoffmaterial wird durch die Austrittsöffnung des Schneckengehäuses ausgedrückt und sodann in fördermögliches Agglomerat zerteilt. Dieses Agglomerat ist zwar rieselförmig, aber hinsichtlich der Größe und Form seiner Teilchen unterschiedlich. Vorteilhaft ist hiebei, dass für den Agglomeriervorgang nur etwa die Hälfte der Energie notwendig ist, welche für eine Plastifizierung des gleichen Materiales aufgebracht werden muss. Bei dem Massenkunststoff Polyethylen sind z.B. für eine Plastifizierung etwa 0,25 bis 0,3 kWh/kg notwendig, für das Agglomerieren jedoch lediglich etwa 0,12 bis 0,15 kWh/kg. In diesen Werten sind die Abstrahl- und Reibungsverluste bereits enthalten. Zusätzlich zu dieser Energieeinsparung ergibt sich als weiterer Vorteil, dass aufgrund der vergleichsweise niedrigeren Verarbeitungstemperatur das Kunststoffmaterial thermisch geschont wird, d.h., dass die Molekülketten des Kunststoffmateriales weniger stark abgebaut werden als bei einer Plastifizierung dieses Materiales. Besonders interessant ist das Agglomerieren für die Kunststoffrecycling-Industrie, wo sehr oft der Fall eintritt, dass gattungsreine Kunststoffe, jedoch mit unterschiedlichen Verarbeitungsparametem, in Mischsilos zusammengeführt werden und erst in der Folge diese Mischung zu einem üblichen, uniformen Granulat verarbeitet wird. Randabschnitte der Folienindustrie werden z.B. sehr oft sofort agglomeriert und dem Verarbeitungsextruder zugeführt. Hiebei ist es wichtig, dass das Schüttgewicht des so erhaltenen Agglomerates annähernd dem des üblichen Granulates entspricht, sodass es in pneumatischen Förderleitungen bzw. im Einfülltrichter eines Extruders nicht zu einer Entmischung zwischen dem üblichen Granulatanteil und dem Agglomeratanteil des zu verarbeitenden Gutes kommt.

Bei einer bekannten Agglomeriervorrichtung der eingangs geschilderten Art erfolgt die Befüllung des Schneckengehäuses gravimetrisch, also durch Hineinfallen des zugeführten Kunststoffgutes in die Einbringeöffnung unter Schwerkrafteinfluss. Nach Durchlaufen der wirksamen Schneckenlänge wird das agglomerierte Kunststoffgut durch eine seitliche Austrittsöffnung ausgedrückt und sodann auf die gewünschte Agglomeratgröße zerkleinert. Diese bekannte Vorrichtung befriedigt nicht im Hinblick auf eine gleichmäßige Befüllung des Extruders und somit auf eine konstante Qualität des Agglomerates.

Die Erfindung setzt sich zur Aufgabe, eine Vorrichtung zum kontinuierlichen Agglomerieren von Kunststoffgut der eingangs geschilderten Art hinsichtlich Energieeinsparung und Qualität des erhaltenen Agglomerates zu verbessern. Die Erfindung löst diese Aufgabe dadurch, dass das Verhältnis von wirksamer Länge der Agglomerierschnecke zu ihrem Nenndurchmesser 4,5 bis 12 beträgt, dass der Kemdurchmesser der Agglomerierschnecke in Richtung zur Austrittsöffnung zunimmt, dass an die Einbringeöffnung eine Einrichtung zur stopfenden Befüllung des Gehäuses angeschlossen ist und dass die von mehreren Kanälen gebildete Austrittsöffnung am Stimende des Gehäuses liegt, welche Kanäle von einem Austragkopf begrenzt sind, der von einem mit der Agglomerierschnecke mitdrehenden und an ihre Schneckengänge anschließenden Schneckenabschnitt gebildet ist, dessen Gangzahl pro Längeneinheit größer ist als jene der Agglomerierschnecke, wobei dieser Austragkopf das von der den Schneckengängen der Agglomerierschnecke bereits weitgehend agglomeriere Gut weiter verdichtet und agglomeriert, sodass mehrere Agglomeratstränge aus den Kanälen des Austragkopfes austreten. Durch die stopfende Befüllung des Gehäuses werden die bei der bekannten Vorrichtung infolge der gravimetrischen Befüllung stets auftretenden Ungieichmäßigkeiten der Befüllung der Schnecke wirksam vermieden. Dies ermöglicht es, das Verhältnis von wirksamer Schneckenlänge zum Schneckendurchmesser geringer zu machen als bei der bekannten Vorrichtung, nämlich 4,5 bis 12, vorzugsweise 4,5 bis 8,5, und zugleich eine gleichmäßige und verlässliche Agglomerierung des zu verarbeitenden Kunststoffgutes zu erreichen, bei größtmöglicher thermischer Schonung desselben. Die auf diese Weise bereits weitgehend agglomerierte Masse wird im Bereich des Austragkopfes durch die in diesem Bereich pro Längeneinheit vergrößerte Schneckengangzahl weiter verdichtet und völlig agglomeriert, da die Schneckengänge des Austragkopfes in Summe ein Aufnahmevolumen bilden, das geringer ist als jenes der Agglomerierschnecke. Da das Verhältnis von wirksamer Länge der Agglomerierschnecke zu ihrem Nenndurchmesser an sich schon geringer ist als bei üblichen Agglomeriervorrichtungen und darüber hinaus auch der Austragkopf eine verhältnismäßig geringe Länge hat, sind die auf das Kunststoffmaterial im Bereich des gesamten Schneckengehäuses, insbesondere im Bereich des Austragkopfes, auftretenden hohen Beanspruchungen verhältnismäßig kurzzeitig, sodass größere thermische Schädigungen des verarbeiteten Kunststoffes vermieden werden. Vorteilhaft ist weiter, dass mehrere Austrittsöffnungen am Stirnende des Gehäuses und nicht - wie beim erwähnten Stand der Technik - eine einzige Öffnung an der Seitenwand des Gehäuses angeordnet ist, sodass eine seitliche Umlenkung des Kunststoffgutes im Bereich seines Austrittes aus dem Gehäuse vermieden ist. Dies bewirkt eine Energie-Einsparung und verbessert die Homogenität des austretenden, agglomerierten Kunststoffgutes, sodass die anschließende Zerkleinerung auf die gewünschte Größe und Form der Agglomeratteilchen ein gleichmäßig rieselfähiges Gut mit konstantem Schüttgewicht ergibt. Besonders günstige Ergebnisse werden hiebei erzielt, wenn gemäß einer bevorzugten Weiterbildung der Erfindung an die Austrittsöffnungen eine Zerkleinerungsvorrichtung, insbesondere eine Granuliervorrichtung, für das aus den Austrittsöffnungen austretende Agglomerat unmittelbar angeschlossen ist. Es kann sich hiebei um Abschlagmesser oder um eine Nassmühle od.dgl. handeln. Der unmittelbare Anschluss kann so gestaltet sein, dass Abschlagmesser od.dgl. über die äußere Stimfläche des Austragkopfes und damit über die Enden der Austrittsöffnungen streichen. Dies ist beim bekannten Stand der Technik nicht möglich, da die seitlich am Extruderrohr angeordnete Austragsöffnung dies nicht zulässt.

Aus WO 93/15892 ist eine Vorrichtung zum Granulieren von Kunststoffen bekannt, bei welcher eine Plastifizierschnecke das Kunststoffmaterial plastifiziert und durch mehrere am Stirnende des Schneckengehäuses angeordnete Austrittsöffnungen fördert, die von Granuliermessern überschliffen sind. Diese Austrittsöffnungen sind von Spiralkanälen begrenzt, die am Umfang eines an die letzten Gänge der Plastifizierschnecke anschließenden Flansch angeordnet sind.

Die Einrichtung zur stopfenden Befüllung des Schneckengehäuses kann im Rahmen der Erfindung von in einem Behälter umlaufenden Messern od.dgl. gebildet sein, von einer Stopfschnecke, oder von einem Ein- oder Mehrwellenzerkleinerer. Besonders günstig ist eine Ausbildung, bei welcher das Gehäuse der Agglomerierschnecke tangential an einen Behälter angeschlossen ist, in dessen Bodenbereich um eine vertikale Achse umlaufende Messer angeordnet sind, wobei der Antrieb für die Agglomerierschnecke und eine Zerkleinerungsvorrichtung für das agglomerierte Kunststoffgut an einander entgegengesetzten Stimenden des Gehäuses angeordnet sind, und wobei die Befüllung des Gehäuses zwischen dem Schneckenantrieb und dem Austragkopf erfolgt, also durch zumindest eine in der Seitenwand des Schneckengehäuses angeordnete Einbringeöffnung. Aber auch dann, wenn die Befüllung des Gehäuses stimseitig erfolgt, also etwa bei einem radialen oder außermittigen Anschluss des Schneckengehäuses an einen Zerkleinerungsbehälter für das zu bearbeitende Gut, lässt sich die erwähnte Anordnung der Zerkleinerungsvorrichtung am anderen Stirnende des Gehäuses problemlos durchführen, etwa wenn zueinander koaxiale Antriebswellen für die Schnecke und die Zerkleinerungsvorrichtung verwendet werden.

Durch Versuche hat es sich herausgestellt, dass sich besonders gute Ergebnisse hinsichtlich der Agglomerierung des Kunststoffgutes erzielen lassen, wenn das Verhältnis von axialer Länge des Austragkopfes zum Nenndurchmesser der Agglomerierschnecke 0,4 bis 1 beträgt. Der Austragskopf und der in ihm befindliche, eine vergrößerte Gangzahl aufweisende Schneckenabschnitt ist daher - gemessen in Axialrichtung der Schnecke - wesentlich kürzer als der restliche Abschnitt der wirksamen Länge der Agglomerierschnecke.

Aus Fertigungs- und Ersatzgründen ist es im Rahmen der Erfindung zweckmäßig, wenn der Austragkopf einen eigenen Bauteil bildet, der mit der Agglomerierschnecke lösbar drehschlüssig verbunden ist, also mit ihr nicht einstückig ausgebildet ist. Aus den gleichen Gründen ist gemäß einer bevorzugten Ausführungsform der Erfindung der Austragkopf in einem eigenen Abschnitt des Gehäuses gelagert, der mit dem restlichen Gehäuse lösbar, jedoch dicht verbunden ist. Der dichte Anschluß ist erforderlich, um einen Materialaustritt trotz der im Gehäuse herrschenden hohen Drücke, die 300 bar und mehr betragen können, zu vermeiden.

Bei einer besonders vorteilhaften Ausführungsform sind im Bereich des Austragkopfes in der inneren Mantelwand des Gehäuses bzw. des den Austragkopf umschließenden Gehäuseabschnittes Nuten vorhanden, deren Richtung sich mit jener der Schneckengänge des Austragkopfes kreuzt, wobei diese Nuten im Abstand von den Austrittsöffnungen enden. Dadurch werden Kunststoffteilchen, die noch nicht genügend zusammengesintert sind, in diesem Bereich einer extremen Scherung unterzogen, was die Sinterung begünstigt. Weiters werden Fremdpartikel durch die auftretenden Scherkräfte zerkleinert und so der Austragsbereich von Verstopfungen frei gehalten. Besonders günstige Verhältnisse ergeben sich im Rahmen der Erfindung, wenn das Profil der Nuten, im Schnitt normal zur Achse des Austragkopfes gesehen, sägezahnartig verläuft. Dies ergibt eine besonders starke Scherwirkung. Die Nuten müssen nicht über die gesamte Länge des Austragkopfes durchlaufen, es genügt vielmehr, diese Nuten nur über einen wesentlichen Abschnitt, z. B. die Hälfte, der axialen Länge des Austragkopfes anzuordnen, welcher Abschnitt von den Austrittsöffnungen im Abstand liegt. In der Regel haben die Nuten geringere Tiefe als die von den Gängen der Agglomerierschnecke gebildeten Kanäle.

Durch die vergrößerte Gangzahl der Schnecke im Bereich des Austragkopfes ergibt sich eine Aufteilung des geförderten Gutes auf mehrere Einzelstränge. Dies hat den Vorteil, daß durch Wahl der Gangzahl der Schnecke und insbesondere durch Wahl der Größe und der Querschnittsform der zwischen den Schneckengängen verbleibenden Kanäle Einfluß genommen werden kann auf den Querschnitt der austretenden Gutstränge und damit auf den Querschnitt bzw. die Größe herzustellender Agglomeratteilchen. Ebenso weicht im Rahmen der Erfindung der Querschnitt der oben erwähnten Nuten hinsichtlich Form und Größe vom Querschnitt der von den Schneckengängen des Austragkopfes begrenzten Kanäle ab, um besonders günstige Scherverhältnisse auf das bearbeitete Material zu erzielen.

Unter "Schneckengängen" sind die wendelartig verlaufenden Rippen der Schnecke zu verstehen, zwischen denen - je nachdem, ob die Schnecke ein- oder mehrgängig ist - ein oder mehrere Kanäle verlaufen, über welche das Material von der Schnecke transportiert wird. Im allgemeinen ist die bei der vorliegenden Erfindung verwendete Agglomerierschnecke eingängig, der Austragkopf hat hingegen - wie erwähnt - eine mehrgängige Schnecke.

Das erfindungsgemäße Verfahren zum kontinuierlichen Agglomerieren von Kunststoffgut mittels einer zur Drehbewegung um ihre Achse angetriebenen Agglomerierschnecke, die das agglomerierte Gut aus ihrem Gehäuse ausdrückt und ein Verhältnis von wirksamer Länge zu Nenndurchmesser hat, das kleiner ist als 16, kennzeichnet sich dadurch, daß die Befüllung des Gehäuses mit dem zu agglomerierenden Gut stopfend erfolgt und die Agglomerierschnecke, deren Verhältnis von wirksamer Länge zu Nenndurchmesser 4,5 bis 12 beträgt, das Gut weitgehend agglomeriert und zu einem an sie anschließenden Austragkopf fördert, der mit der Agglomerierschnecke mitgedreht wird und Schneckengänge hat, deren Gangzahl größer ist als jene der Agglomerierschnecke, sodaß die Schneckengänge des Austragkopfes das Gut weiter verdichten und agglomerieren und das agglomerierte Gut durch mehrere Austrittsöffnungen am Stirnende des Gehäuses ausgedrückt wird. Vorzugsweise wird hiebei so vorgegangen, daß das durch den Austragkopf transportierte, agglomierte Gut extremen Scherkräften unterworfen wird.

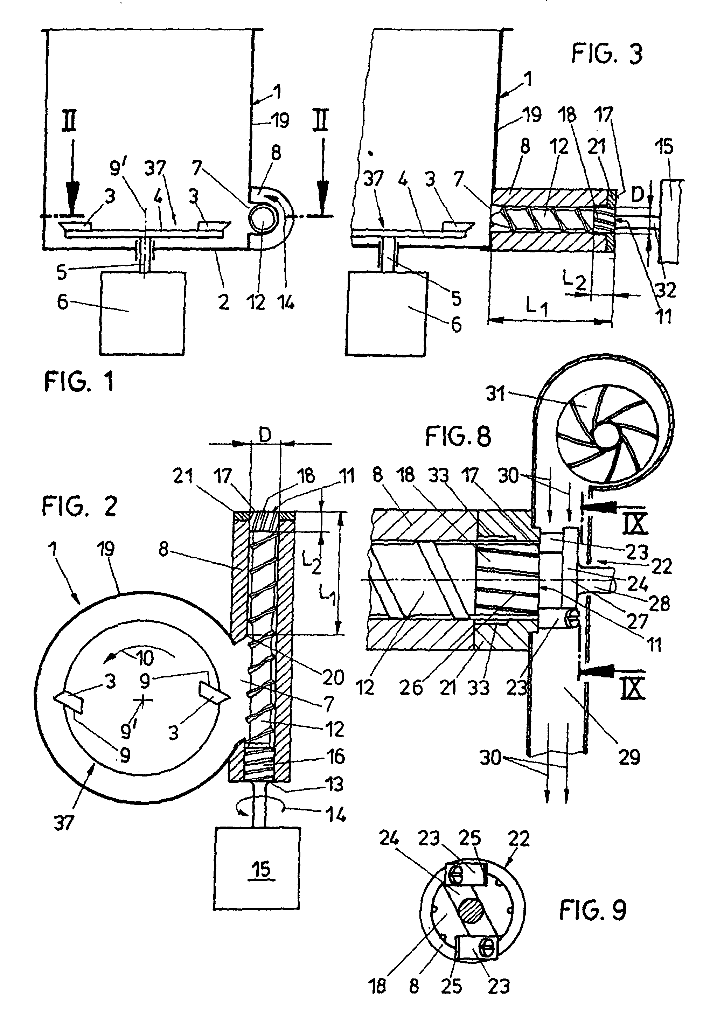

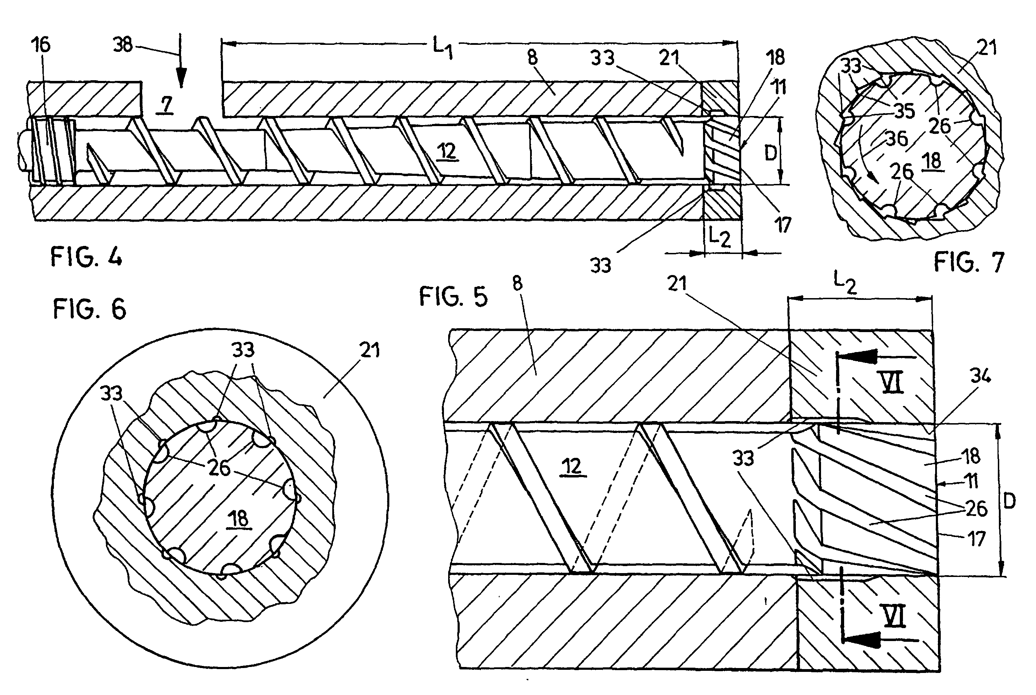

Weitere Kennzeichen und Vorteile der Erfindung ergeben sich aus der Beschreibung von Ausführungsbeispielen der erfindungsgemäßen Vorrichtung, welche in der Zeichnung schematisch dargestellt sind. Fig. 1 zeigt einen Vertikalschnitt durch eine erste Ausführungsform der Erfindung. Fig. 2 ist ein Schnitt nach der Linie II - II der Fig. 1. Fig. 3 zeigt eine zweite Ausführungsform im Vertikalschnitt. Fig. 4 zeigt in größerem Maßstab einen Schnitt durch die Agglomerierschnecke und ihr Gehäuse bei einer Ausführungsform gemäß den Fig. 1 und 2. Fig. 5 zeigt in nochmals vergrößertem Maßstab die Verhältnisse am austragsseitigen Ende der Agglomerierschnecke im Axialschnitt. Fig. 6 ist ein Schnitt nach der Linie VI - VI der Fig. 5. Fig. 7 zeigt eine Ausführungsvariante zu Fig. 6. Fig. 8 zeigt die Anordnung einer Zerkleinerungsvorrichtung am austragsseitigen Ende der Agglomerierschnecke im Schnitt und Fig. 9 ist ein Schnitt nach der Linie IX - IX durch ein Detail der Fig. 8.

Bei der Ausführungsform nach den Fig. 1 und 2 hat die Vorrichtung einen Behälter 1 für das zu bearbeitende Kunststoffgut, insbesondere thermoplastisches Material, jedoch gegebenenfalls auch mit in der Regel geringen Beimengungen duroplastischen Materiales, welche im Endprodukt als Füllstoffe wirken. Dieses Material wird von oben durch eine Öffnung mittels einer nicht dargestellten Beschickungsvorrichtung in den Behälter 1 eingebracht und im Behälter mittels um eine vertikale Achse im Bereich des Bodens 2 des Behälters 1 umlaufender Werkzeuge 3, insbesondere Messer, zerkleinert, gemischt, erwärmt und vorverdichtet, wobei gegebenenfalls auch eine Trocknung des Materiales stattfindet. Die Werkzeuge 3 sind auf einer Rotorscheibe 4, die über eine mittige Welle 5 von einem außerhalb des Behälters 1 angeordneten Antriebes 6 zur Drehung angetrieben wird, so angeordnet, daß sie das zerkleinerte Gut in eine Einbringeöffnung 7 eines Schneckengehäuses 8 drücken und derart dieses Gehäuse 8 stopfend befüllen. Hiezu können die Werkzeuge 3 mit schräg verlaufenden Arbeitskanten 9 (Fig. 2) auf der Rotorscheibe 4 so montiert sein, daß sich die erwähnte Stopfwirkung beim Umlauf der Werkzeuge 3 um die mittige Achse 9' in Richtung des Pfeiles 10 spachtelartig ergibt.

Im Gehäuse 8 ist eine Agglomerierschnecke 12 gelagert, durch welche das durch die Einbringeöffnung 7 in das Gehäuse 8, z.B. in Flockenform, eingedrückte Kunststoffgut im Gehäuse 8 agglomeriert und dieses agglomerierte Gut durch eine Austrittsöffnung 11 aus dem Gehäuse 8 ausgedrückt wird. Hiebei erfolgt keine Plastifizierung des bearbeiteten Kunststoffmateriales, sondern nur eine Zusammenbackung benachbarter Kunststoffteilchen, ähnlich einer Sinterung, was bei im Vergleich zu einer Plastifizierung wesentlich niedrigeren Bearbeitungstemperaturen im Gehäuse 8 erfolgt. Die Schnecke 12 wird am einen Stirnende 13 in Richtung des Pfeiles 14 durch einen Antrieb 15 zur Drehung um ihre Längsachse angetrieben. Der im Bereich des Stimendes 13 der Schnecke 12 liegende Abschnitt derselben ist als Dichtgewinde 16 mit vergrößerter Gangzahl ausgebildet, sodaß das über die Einbringeöffnung 7 in das Gehäuse 8 eingebrachte Kunststoffmaterial nicht durch das Stimende 13 austreten kann, sondem verläßlich in Richtung zum anderen Stirnende 17 gefördert wird. Dort ist die Schnecke 12 mit einem Austragskopf 18 versehen, der ebenfalls mit Schneckengängen ausgebildet ist, deren Steigung jedoch wesentlich größer ist als jene im übrigen Abschnitt der Schnecke 12, wobei der Austragskopf 18 auch eine im Vergleich zum Restabschnitt der Schnecke 12 vergrößerte Gangzahl pro Längeneinheit aufweist. Im dargestellten Ausführungsbeispiel ist die Agglomerierschnecke 12 eingängig, die am Austragskopf 18 angeordneten Schneckengänge haben hingegen acht Gänge (siehe Fig. 6).

Wie aus Fig. 2 ersichtlich, liegt die Schnecke 12 bzw. das sie lagernde Schneckengehäuse 8 zumindest annähernd tangential zum Umfang der Mantelwand 19 des Behälters 1, sodaß die Einbringeöffnung 7 die Seitenwand des Schneckengehäuses 8 durchsetzt und zwischen den beiden Stirnenden 13, 17 der Schnecke 12 liegt. Wesentlich für die Wirkung der Schnecke 12 als Agglomerierschnecke ist, daß ihr Verhältnis von wirksamer Schneckenlänge L₁ zu ihrem Nenndurchmesser D (gleich dem Innendurchmesser des Schneckengehäuses 8) wesentlich kleiner ist als bei üblichen Plastifizierschnecken. Bei Ausführungsformen nach den Fig. 1 und 2 liegt dieses Verhältnis L₁ /D zwischen 4,5 und 12, vorzugsweise zwischen 4,5 und 8,5. Im konkreten Fall der Fig. 2 beträgt dieses Verhältnis 6. In Fig. 2 ist dieses Verhältnis maßstäblich eingezeichnet, die übrigen Bauteile der Vorrichtung, insbesondere der Behälter 1 sind selbstverständlich nicht maßstäblich eingezeichnet, um die Übersicht zu erhöhen.

Unter "wirksame Schneckenlänge" ist hiebei jene Länge der Schnecke 12 zu verstehen, welche zwischen dem der Austrittsöffnung 11 benachbarten Rand 20 der Einbringeöffnung 7 und der Austrittsöffnung 11 liegt.

Der Austragskopf 18 bildet einen von dem restlichen Abschnitt der Schnecke 12 gesonderten Bauteil, der jedoch mit der Schnecke 12 lösbar und drehschlüssig verbunden ist. Dies ermöglicht eine leichte Auswechslung dieses hochbeanspruchten Bauteiles. Aus den gleichen Gründen ist der Austragskopf 18 in einem Gehäuseabschnitt 21 gelagert, der mit dem restlichen Gehäsue 8 lösbar, jedoch dicht verbunden ist, um die im Gehäuse 8 herrschenden hohen Drücke aufnehmen zu können. Die lösbare Verbindung zwischen dem Austragskopf 18 und dem restlichen Schneckenabschnitt 12 kann z.B. eine Gewindeverbindung sein, wobei die Gewinderichtung so gewählt ist, daß sich diese Gewindeverbindung bei der Drehung der Schnecke im Betrieb nicht löst. Für die lösbare und dichte Verbindung zwischen den Gehäuseteilen 8, 21 können herkömmliche Flanschverbindungen od.dgl. herangezogen werden.

In Achsrichtung der Schnecke 12 gemessen, ist der Austragskopf 18 wesentlich kürzer als die wirksame Schneckenlänge L₁. Versuche haben ergeben, daß günstige Ergebnisse für das Verhältnis der axialen Länge L₂ des Austrangskopfes zum Nenndurchmesser der Agglomerierschnecke 12, also zum Innendurchmesser des Gehäuses 8, zwischen 0,4 und 1 erzielt werden.

An das äußere Stimende des Austragskopfes 18 ist eine Zerkleinerungsvorrichtung 22 (Fig. 8, 9) für die aus dem Austragskopf 18 austretenden Agglomeratstränge unmittelbar angeschlossen, welche diese Stränge auf die gewünschte Größe der Agglomeratteilchen unterteilt. Ein Beispiel einer solchen Zerkleinerungsvorrichtung 22 ist in den Fig. 8 und 9 dargestellt. Diese Zerkleinerungsvorrichtung 22 hat zumindestens ein, vorzugsweise mehrere, Messer 23, die als Granuliermesser ausgebildet sind und auf einem gemeinsamen Messerträger 24 so montiert sind, daß sie mit ihren Schneidkanten 25 über die Stimfläche 17 des Austragkopfes 18 in jenem Bereich streichen, in welchem die zwischen den einzelnen Schneckengängen des Austragkopfes 18 liegenden Kanäle 26 des Austragkopfes 18 an dem Stirnende 17 desselben münden. Dadurch werden aus den dort austretenden Agglomeratsträngen Granulatteilchen abgetrennt, deren Größe abhängig ist vom Verhältnis der Geschwindigkeit der aus den Kanälen 26 austretenden Kunststoffstränge zur Umlaufgeschwindigkeit der Messer 23. Diese Messer 23 werden zum Umlauf um die Achse 27 der Schnecke 12 über eine den Messerträger tragende Welle 28 von einem nicht dargestellten Antrieb angetrieben. Die Drehzahl der Welle 28 ist größer als die Drehzahl der Agglomerierschnecke 12 und des Austragkopfes 18. Die von den Messern 23 abgeschlagenen Granulatteilchen werden mittels eines Kühlluftstromes abgeführt, welcher in einem Kanal 29 in Richtung der Pfeile 30 strömt und von einem Gebläse 31 erzeugt wird.

Eine andere Grundanordnung der Vorrichtung ist in Fig. 3 dargestellt. Hiebei ist das Schneckengehäuse 8 im Bodenbereich des Behälters 1 mit seinem einen Stirnende an die Mantelwand 19 des Behälters 1 angeschlossen, sodaß die umlaufenden Werkzeuge 3 eine stirnseitig angeordnete Einbringeöffnung 7 des Gehäuses 8 stopfend mit dem zu verarbeitenden Gut befüllen. Die Anordnung kann so gewählt sein, daß die im Gehäuse 8 gelagerte Schnecke 12 mit ihrer Achse radial zum Kreisquerschnitt des Behälters 1 angeordnet ist, jedoch sind auch exzentrische Anordnungen möglich, derart, daß die Einbringeöffnung 7 gegen die Zulaufseite der umlaufenden Werkzeuge 3 zu aus der radialen Anordnung versetzt ist. Bei dieser Konstruktion erfolgt der Antrieb der Schnecke 12 vom äußeren Stirnende 17 her mittels einer daran befestigten Welle 32, welche durch den Antrieb 15 angetrieben wird. Dies schließt nicht aus, daß auch bei einer solchen Konstruktion eine Zerkleinerungsvorrichtung 22 der Grundkonstruktion nach den Fig. 8 und 9 Anwendung findet, es muß dann lediglich die Welle 28 für den Antrieb der Zerkleinerungsvorrichtung 22 als die Welle 32 umgebende und im Vergleich zur Welle 32 rascher drehende Hohlwelle ausgebildet werden.

In Fig. 4 ist eine Agglomerierschnecke 12 samt ihrem Gehäuse 8 gemäß einer Ausführungsform nach den Fig. 1 und 2 in größerem Maßstab und maßstäblich dargestellt. Das Verhältnis von wirksamer Schneckenlänge L₁ zum Nenndurchmesser D der Schnecke beträgt hiebei 7,55, das Verhältnis der axialen Länge des Austragkopfes 18 zum Nenndurchmesser D der Schnecke beträgt 0,55. Wie ersichtlich, ist die Schnecke 12 mit einem in Richtung zum Stirnende 17 zunehmenden Kerndurchmesser ausgebildet, um den Druck auf das zu verarbeitende Material allmählich zu erhöhen. Wie sich gezeigt hat, arbeitet die Schnecke 12 jedoch zumeist fast adiabatisch, d.h. die Arbeitstemperatur der Schnecke 12 bleibt annähernd konstant, da die dem Motor zugeführte Energie der gesamten abgeführten Energie (inklusive Abstrahlungsverluste etc.) die Waage hält. Lediglich etwa 10 bis 20 % der zum Agglomerieren des zu behandelnden Kunststoffes nötigen Energie wird über die Schnecke auf den Kunststoff eingebracht, der Hauptanteil dieser Energie wird dem Kunststoff im vom Behälter 1 bzw. dem in ihm umlaufenden Werkzeugen 3 gebildeten Zerreisser zugeführt.

Die Ausführungsform nach den Fig. 5 und 6 zeigt genauer die Verhältnisse am Austragkopf 18 bei einer gegenüber derAusführungsform nach Fig. 4 etwas geänderten Konstruktion: Das Verhältnis von L₂/D beträgt bei der Ausführungsform nach den Fig. 5 und 6 annähernd 0,95. Wie die Fig. 5 und 6 deutlich zeigen, sind im Bereich des Austragkopfes 18 in die innere Mantelwand des Gehäuseabschnittes 21 Nuten 33 eingearbeitet, deren in radialer Richtung gemessene Tiefe geringer ist als die in der gleichen Richtung gemessene Tiefe der zwischen den Rippen der Agglomerierschnecke 12 liegenden, das Gut führenden Kanäle. Die Richtung dieser Nuten 33 kann parallel zur Achse der Schnecke 12 verlaufen oder schräg zu dieser Richtung. Stets jedoch ist die Richtung dieser Nuten 33 so gewählt, daß sich diese Richtung mit der Richtung der Schneckengänge des Austragkopfes 18 kreuzt. Durch diese Kreuzung zwischen Nuten 33 und den Kanälen 26 zwischen den Gewindegängen des Austragkopfes 18 entstehen extreme Scherkräfte für die durch den Austragkopf 18 transportierte agglomerierte Masse. Gegebenenfalls in dieser Masse enthaltene Fremdteilchen werden daher zerrieben, was den Vorteil hat, daß der Austragsbereich des Austragkopfes 18 von Verstopfungen frei gehalten wird. Wie Fig. 5 zeigt, erstrecken sich die Nuten 33 nur über einen Teil der axialen Länge des Austragkopfes 18, und zwar etwa über jene Hälfte dieser Länge, welche an den Restteil der Schnecke 12 anschließt und in Abstand liegt von der Austrittsöffnung 11. Der Austragsbereich des Austragkopfes 18 ist daher lediglich von der zylindrischen Innenwand 34 des Gehäuseabschnittes 21 und den Gängen des Austragkopfes 18 begrenzt. Dies hat Bedeutung im Hinblick auf den Querschnitt der aus den Kanälen 26 zwischen den Gängen des Austragkopfes 18 austretenden Agglomeratstränge. Würden sich nämlich die Nuten 33 bis zum äußeren Stirnende 17 des Austragkopfes 18 erstrecken, so würde auch durch diese Nuten 33 Agglomeratgut austreten und durch die umlaufenden Messer 23 (Fig. 8, 9) zerkleinert werden. Da der Querschnitt der Nuten 33 hinsichtlich Form und Größe abweicht vom Querschnitt der Kanäle 26, hätte dies ungleichmäßige Querschnitte und damit ungleichmäßige Größen der mittels der Zerkleinerungsvorrichtung 22 erhaltenen Granulatteilchen zur Folge.

Wie Fig. 6 zeigt, können sowohl die Kanäle 26 als auch die Nuten 33 von Kreisbogen begrenzt sein, etwa derart, daß sich halbkreisförmige Querschnitte der Kanäle 26 bzw. der Nuten 33 ergeben. Noch günstiger ist es jedoch, wie Fig. 7 zeigt, die Nuten 33, im Schnitt normal zur Achse des Austragkopfes 18 gesehen, mit sägezahnartigem Profil auszubilden, wobei die Richtung der entstehenden Sägezähne so gewählt ist, daß die Zähne 35 dieses Profiles beim Umlauf des Austragkopfes 18 (Pfeil 36) zerkleinernd auf die von den Kanälen 26 des Austragkopfes 18 transportierte agglomerierte Masse wirksam werden.

Selbstverständlich kann, wie bereits erwähnt, eine Zerkleinerungsvorrichtung, wie sie in den Fig. 8 und 9 dargestellt ist, bei allen dargestellten Ausführungsformen Anwendung finden. Ebenso ist es möglich, die Zerkleinerungsvorrichtung 22 auch andersartig auszubilden, z.B. als Naßmühle, welcher die aus den Kanälen 26 austretenden Agglomeratstränge unmittelbar zugeleitet werden, sodaß die Gewinnung der Granulatteilchen im noch heißen Zustand der Stränge erfolgt.

Wie ebenfalls bereits erwähnt, bildet die mit den Werkzeugen 3 versehene umlaufende Rotorscheibe 4 eine Einrichtung 37 (Fig. 1 bis 3) zur stopfenden Befüllung des Gehäuses 8 der Agglomerierschnecke 12, sodaß das zu behandelnde Gut mit einer in Richtung des Pfeiles 38 gerichteten Bewegungskomponente durch die Einbringeöffnung 7 in das Gehäuse 8 eingedrückt wird. Eine solche Einrichtung 37 kann jedoch auch von einer Stopfschnecke gebildet sein, etwa derart, daß an die Einbringeöffnung 7 (Fig. 4) ein Einfülltrichter für das zu behandelnde Gut angeschlossen ist, in welchem die umlaufende Stopfschnecke so angeordnet ist, daß sich eine Eindrückwirkung auf das Gut in Richtung des Pfeiles 38 ergibt. Eine weitere Ausbildungsmöglichkeit für eine solche Stopfeinrichtung 37 besteht darin, an die Einbringeöffnung 7 einen Einwellen- oder Zweiwellen-Zerkleinerer anzuschließen, dessen umlaufende Messer eine Vorzerkleinerung des zu behandelnden Gutes bewirken und zugleich die erwähnte Stopfwirkung besorgen.

## Patentansprüche

1. Vorrichtung zum kontinuierlichen Agglomerieren von Kunststoffgut, insbesondere zu Recyclingzwecken, mit einer in einem Gehäuse (8) gelagerten, durch einen Antrieb (15) zu einer Drehbewegung um ihre Achse (27) angetriebenen Agglomerierschnecke (12), welche das Kunststoffgut lediglich zusammenbackt, aber nicht plastifiziert, und der das zu behandelnde Gut durch eine Einbringeöffnung (7) des Gehäuses (8) zugeführt wird und die das agglomerierte Gut durch eine Austrittsöffnung (11) aus dem Gehäuse (8) ausdrückt, wobei das Verhältnis von wirksamer Länge (L₁) der Agglomerierschnecke (12) zu ihrem Nenndurchmesser (D) kleiner ist als 16, **dadurch gekennzeichnet, dass** das Verhältnis von wirksamer Länge (L₁) der Agglomerierschnecke (12) zu ihrem Nenndurchmesser (D) 4,5 bis 12 beträgt, dass der Kerndurchmesser der Agglomerierschnecke (12) in Richtung zur Austrittsöffnung (11) zunimmt, dass an die Einbringeöffnung (7) eine Einrichtung (37) zur stopfenden Befüllung des Gehäuses (8) angeschlossen ist und dass die von mehreren Kanälen (26) gebildete Austrittsöffnung (11) am Stimende des Gehäuses (8) liegt, welche Kanäle (26) von einem Austragkopf (18) begrenzt sind, der von einem mit der Agglomerierschnecke (12) mitdrehenden und an ihre Schneckengänge anschließenden Schneckenabschnitt gebildet ist, dessen Gangzahl pro Längeneinheit größer ist als jene der Agglomerierschnecke (12), wobei dieser Austragkopf (18) das von den Schneckengängen der Agglomerierschnecke (12) bereits weitgehend agglomierte Gut weiter verdichtet und agglomeriert, sodass mehrere Agglomeratstränge aus den Kanälen (26) des Austragskopfes (18) austreten.

2. Vorrichtung nach Anspruch 1, **dadurch gekennzeichnet, dass** das Verhältnis von wirksamer Länge (L₁) der Agglomerierschnecke (12) zu ihrem Nenndurchmesser (D) 4,5 bis 8,5 beträgt.

3. Vorrichtung nach Anspruch 1 oder 2, **dadurch gekennzeichnet, dass** an die Austrittsöffnung (11) eine Zerkleinerungsvorrichtung (22), insbesondere eine Granuliervorrichtung, für die aus den Kanälen (26) austretenden Agglomeratstränge unmittelbar angeschlossen ist.

4. Vorrichtung nach Anspruch 1, 2 oder 3, **dadurch gekennzeichnet, dass** die Einrichtung (37) zur stopfenden Befüllung des Gehäuses (8) einen mit der Einbringeöffnung (7) in Strömungsverbindung stehenden Behälter (1) für das zu verarbeitende Gut aufweist, in welchem zumindest ein das Gut in die Einbringeöffnung (7) drückender Bauteil umläuft.

5. Vorrichtung nach Anspruch 4, **dadurch gekennzeichnet, daß** die Einrichtung (37) zur stopfenden Befüllung des Gehäuses (8) um zumindest eine Drehachse umlaufende, das Gut bearbeitende Werkzeuge (3), z.B. Messer, und/oder zumindest eine umlaufende Schnecke aufweist.

6. Vorrichtung nach Anspruch 5, **dadurch gekennzeichnet, daß** das Gehäuse (8) der Agglomerierschnecke (12) tangential an einen Behälter (1) angeschlossen ist, in dessen Bodenbereich um eine vertikale Achse (9) umlaufende Messer angeordnet sind, wobei der Antrieb für die Agglomerierschnecke (12) und der Antrieb (15) für die Zerkleinerungsvorrichtung (22) für das agglomerierte Kunststoffgut an einander entgegengesetzten Stimenden des Gehäuses (8) angeordnet sind.

7. Vorrichtung nach einem der Ansprüche 1 bis 6, **dadurch gekennzeichnet, daß** das Verhältnis der axialen Länge (L₂) des Austragkopfes (18) zum Nenndurchmesser (D) der Agglomerierschnecke (12) 0,4 bis 1 beträgt.

8. Vorrichtung nach einem der Ansprüche 1 bis 7, **dadurch gekennzeichnet, daß** die von den Schneckengängen des Austragkopfes (18) begrenzten Kanäle (26) in Summe ein Aufnahmevolumen haben, das geringer ist als jenes der von den Schneckengängen der, vorzugsweise eingängigen, Agglomerierschnecke (12) begrenzten Kanäle.

9. Vorrichtung nach einem der Ansprüche 1 bis 8, **dadurch gekennzeichnet, daß** der Austragkopf (18) einen eigenen Bauteil bildet, der mit der Agglomerierschnecke (12) lösbar drehschlüssig verbunden ist.

10. Vorrichtung nach Anspruch 9, **dadurch gekennzeichnet, daß** der Austragkopf (18) in einem eigenen Abschnitt (21) des Gehäuses (8) gelagert ist, der mit dem restlichen Gehäuseabschnitt lösbar, jedoch dicht, verbunden ist.

11. Vorrichtung nach einem der Ansprüche 1 bis 10, **dadurch gekennzeichnet, daß** im Bereich des Austragkopfes (18) in der inneren Mantelwand (34) des Gehäuses (12) bzw. des Gehäusesabschnittes (21) Nuten (33) vorhanden sind, deren Richtung sich mit jener der Schneckengänge des Austragkopfes (18) kreuzt, wobei diese Nuten (33) im Abstand von den Austrittsöffnungen (11) enden.

12. Vorrichtung nach Anspruch 11, **dadurch gekennzeichnet, daß** das Profil der Nuten (33), im Schnitt normal zur Achse des Austragkopfes (18) gesehen, sägezahnartig verläuft.

13. Vorrichtung nach Anspruch 11 oder 12, **dadurch gekennzeichnet, daß** sich die Nuten (33) nur über einen wesentlichen Abschnitt, z.B. die Hälfte, der axialen Länge des Austragkopfes (18) erstrecken, welcher Abschnitt von der Mündung der Kanäle (26) des Austragkopfes (18) im Abstand liegt.

14. Vorrichtung nach einem der Ansprüche 11 bis 13, **dadurch gekennzeichnet, daß** der Querschnitt der Nuten (33) hinsichtlich Form und Größe vom Querschnitt der von den Schneckengängen des Austragkopfes (18) begrenzten Kanäle (26) abweicht.

15. Vorrichtung nach einem der Ansprüche 11 bis 14, **dadurch gekennzeichnet, daß** die Nuten (33) geringere Tiefe haben als die von den Gängen der Agglomerierschnecke gebildeten Kanäle.

16. Verfahren zum kontinuierlichen Agglomerieren von Kunststoffgut mittels einer zur Drehbewegung um ihre Achse angetriebenen Agglomerierschnecke, die das agglomerierte Gut aus ihrem Gehäuse ausdrückt und ein Verhältnis von wirksamer Länge zu Nenndurchmesser hat, das kleiner ist als 16, **dadurch gekennzeichnet, daß** die Befüllung des Gehäuses mit dem zu agglomerierenden Gut stopfend erfolgt und die Agglomerierschnecke, deren Verhältnis von wirksamer Länge zu Nenndurchmesser 4,5 bis 12 beträgt, das Gut weitgehend agglomeriert und zu einem an sie anschließenden Austragkopf fördert, der mit der Agglomerierschnecke mitgedreht wird und Schneckengänge hat, deren Gangzahl größer ist als jene der Agglomerierschnecke, sodaß die Schneckengänge des Austragkopfes das Gut weiter verdichten und agglomerieren und das agglomerierte Gut durch mehrere Austrittsöffnungen am Stirnende des Gehäuses ausdrücken.

17. Verfahren nach Anspruch 16, **dadurch gekennzeichnet, daß** das durch den Austragkopf transportierte agglomerierte Gut extremen Scherkräften unterworfen wird.

## Claims

1. A device for continuously agglomerating plastic material, particularly for recycling purposes, comprising an agglomerating screw (12) supported in a housing (8) and being driven to rotate about its axis (27) by drive means (15), said agglomerating screw packing said plastic material only, but not plastifying it, while the material to be treated is supplied to it through an inlet opening (7) of said housing (8), and it presses said material after having been agglomerated out of said housing (8) through an outlet opening (11), the ratio of the effective length (L₁) of said agglomerating screw (12) to its nominal diameter (D) being smaller than 16, **characterised in that** the ratio of the effective length (L₁) of said agglomerating screw (12) to its nominal diameter (D) is 4.5 to 12, and that the core diameter of said agglomerating screw (12) is increasing in the direction towards said outlet opening (11), that said inlet opening (7) communicates with a device (37) for filling said housing (8) under tamping, and that said outlet opening (11), formed by a plurality of channels (26), is situated at the front end of said housing (8), said channels (26) being defined by a discharge head (18) formed by a screw section co-rotating with said agglomerating screw (12) and adjoining to its augers, whose number auf augers per unit of length is greater than that of said agglomerating screw (12), said discharge head (18) further compacting and agglomerating the material that has already been agglomerated to a high extent by said agglomerating screw (12) so that a plurality of strands of agglomerate leave said channels (26) of said discharge head (18).

2. Device according to claim 1, **characterised in that** the ratio of the effective length (L₁) of said agglomerating screw (12) to its nominal diameter (D) is 4.5 to 8.5.

3. Device according to claim 1 or 2, **characterised in that** a comminuting device (22), particularly a granulating device, for the agglomerated strands exiting said channels (26) is immediately adjoined to said outlet opening (11).

4. Device according to claim 1, 2 or 3, **characterised in that** said device (37) for filling said housing (8) under tamping comprises a container (1) communicating with said inlet opening (7) for said material to be processed, wherein at least one element rotates which presses said material into said inlet opening (7).

5. Device according to claim 4, **characterised in that** said device (37) for filling said housing (8) under tamping comprises tools (3) rotating about at least one axis of rotation and treating said material, e.g. knives and/or at least one rotating screw.

6. Device according to claim 5, **characterised in that** said housing (8) of said agglomerating screw (12) is tangentially connected to a container (1) where knives rotating about a vertical axis (9) are located in the bottom region, said drive means for said agglomerating screw (12) and the drive means (15) for said comminuting device (22) for the agglomerated plastic material being arranged at opposite front ends of said housing (8).

7. Device according to any of claims 1 to 7, **characterised in that** the ratio of the axial length (L₂) of said discharge head (18) to the nominal diameter (D) of said agglomerating screw (12) is 0.4 to 1.

8. Device according to any of claims 1 to 7, **characterised in that** the channels (26) delimited by said augers of said discharge head (18) have a total receiving volume smaller than that of the channels defined by the threads of said, preferably single treaded, agglomerating screw (12).

9. Device according to any of claims 1 to 8, **characterised in that** said discharge head (18) forms a separate component releasably connected to said agglomerating screw (12) for common rotation.

10. Device according to claim 9, **characterised in that** said discharge head (18) is supported within a separate section (21) of said housing (8) and is releasably, but tightly, connected to the remaining housing section.

11. Device according to any of claims 1 to 10, **characterised in that** grooves (33) are provided within the inner peripheral wall (34) of said housing (8) or said housing section (21) in the region of said discharge head (18) whose direction crosses that of said augers of said discharge head (18), said grooves (33) terminating in a distance from said outlet openings (11).

12. Device according to claims 11, **characterised in that** the profile of said grooves (33), when seen in a cross-section perpendicular to the axis of said discharge head (18), has the shape of saw teeth.

13. Device according to claim 11 or 12, **characterised in that** said grooves (33) extend over a substantial portion only, e.g. a half, of the axial length of said discharge head (18), said portion being spaced from the orifices of said channels (26) of said discharge head (18).

14. Device according to any of claims 11 to 13, **characterised in that** the shape and size of the cross-section of said grooves (33) differs from the cross-section of said channels (26) delimited by said augers of said discharge head (18).

15. Device according to any of claims 11 to 14, **characterised in that** said grooves (33) have a depth smaller than the channels formed by the threads of said agglomerating screw.

16. A method for continuously agglomerating plastic material by means of a agglomerating screw, rotationally driven about its axis, which presses the agglomerated material out of its housing and has a ratio of effective length to nominal diameter smaller than 16, **characterised in that** filling said housing with the material to be agglomerated is effected under tamping, and that said agglomerating screw, whose ratio of effective length to nominal diameter is 4.5 to 12, agglomerates said material to a large extent and supplies it to an adjoining discharge head which is rotated together with said agglomerating screw and has augers, the number of which is greater than that of said agglomerating screw so that the augers of said discharge head compact and agglomerate said material further and extrude the agglomerated material through a plurality of outlet openings at the front end of said housing.

17. Method according to claim 16, **characterised in that** the agglomerated material transported through said discharge head is subjected to extreme shearing forces.

## Revendications

1. Dispositif pour l'agglomération en continu de produits en matière plastique, notamment à des fins de recyclage, comprenant une vis d'agglomération (12) logée dans un boîtier (8) et étant entraînée à toumer autour son axe (27) par un moyen d'entraînement (15), ladite vis seulement prenant la matière plastique en masse sans le plastifier, à laquelle la matière à traiter est amenée par une ouverture d'introduction (7) du boîtier (8) et qui exprime la matière agglomérée hors du boîtier (8) par un orifice de sortie (11), le rapport de la longueur effective (L₁) de la vis d'agglomération (12) à son diamètre nominal (D) étant plus petit que 16, **caractérisé en ce que** le rapport de la longueur effective (L₁) de la vis d'agglomération (12) à son diamètre nominal (D) est 4,5 à 12, et que le diamètre du noyaux de la vis d'agglomération (12) s'agrandit en direction vers l'orifice de sortie (11), que l'ouverture d'introduction (7) est en communication avec un dispositif (37) pour remplir en fourrant dans le boîtier (8), et que l'orifice de sortie (11) formé par plusieurs passages (26) est situé à l'extrémité frontale du boîtier (8), lesdites passages (26) étant délimitées par une tête d'extraction (18) formée par un segment de vis, qui tourne conjointement avec la vis d'agglomération (12) et est relié aux spires de celle-ci, et dont le nombre de spires par unité de longueur et plus grand que celui-ci de ladite vis d'agglomération (12), ladite tête d'extraction (18) comprimant et agglomérant encore la matière déjà agglomérée considérablement par les spires de la vis d'agglomération (12), de manière que plusieurs boudins d'agglomérat sortent des passages (26) de la tête d'extraction (18).

2. Dispositif selon la revendication 1, **caractérisé en ce que** le rapport de la lonaueur effective (L₁) de la vis d'agglomération (12) à son diamètre nominal (D) est 4,5 à 8,5.

3. Dispositif selon la revendication 1 ou 2ᵢ **caractérisé en ce qu'**un dispositif de fragmentation (22), particulièrement un dispositif granulateur, pour les boudins d'agglomérat, qui sortent des passages (26), est raccordé immédiatement à l'orifice de sortie (11).

4. Dispositif selon une quelconque des revendications 1, 2 ou 3, **caractérisé en ce que** le dispositif (37) pour remplir en fourrant dans le boîtier (8) comprend un récipient (1) pour la matière a traiter, qui communique avec l'ouverture d'introduction (7), et dans lequel tourne au moins un élément serrant ladite matière dans l'ouverture d'introduction (7).

5. Dispositif selon la revendication 4, **caractérisé en ce que** le dispositif (37) pour remplir en fourrant dans le boîtier (8) comprend des outils (3), par exemple des couteaux et/ou au moins une vis toumante, qui toument autour au moins un axe de rotation et traitent ladite matière.

6. Dispositif selon la revendication 5, **caractérisé en ce que** le boîtier (8) de la vis d'agglomération (12) est raccordé tangentiellement à un récipient (1), ou des couteaux, toumant autour d'un axe vertical (9), sont disposés dans la zone de fond, le moyen d'entraînement de la vis d'agglomération (12) et le moyen d'entraînement (15) du dispositif de fragmentation (22) pour la matière plastique agglomérée étant situés aux extrémités frontales opposées du boîtier (8).

7. Dispositif selon une quelconque des revendications 1 à 6, **caractérisé en ce que** le rapport de la longueur axiale (L₂) de la tête d'extraction (18) au diamètre nominal (D) de la vis d'agglomération (12) est 0,4 à 1.

8. Dispositif selon une quelconque des revendications 1 à 7, **caractérisé en ce que** la totalité des passages (26) délimitées par les spires de vis de la tête d'extraction (18) ont un volume de captage plus petit que celui-ci des passages délimitées par les spires de la vis d'agglomération (12), préférablement à pas simple.

9. Dispositif selon une quelconque des revendications 1 à 8, **caractérisé en ce que** la tête d'extraction (18) forme un élément séparé raccordé d'une manière détachable à la vis d'agglomération (12) pour une rotation commune.

10. Dispositif selon la revendication 9, **caractérisé en ce que** la tête d'extraction (18) est logée dans un segment séparé (21) du boîtier (8), qui est raccordé d'une manière détachable, mais étanche, au segment de boîtier restant.

11. Dispositif selon une quelconque des revendications 1 à 10, **caractérisé en ce que** des rainures (33) sont prévues dans la paroi circonférentielle inteme (34) du boîtier (12) ou du segment de boîtier (21) dans la zone de ladite tête d'extraction (18), dont la direction se croise avec celle des spires de vis de la tête d'extraction (18), lesdites rainures (33) se terminant dans une distance des orifices de sortie (11).

12. Dispositif selon la revendication 11, **caractérisé en ce que** le profil des rainures (33), vu en coupe perpendiculaire à l'axe de la tête d'extraction (18), est en dents de scie.

13. Dispositif selon une des revendications 11 ou 12, **caractérisé en ce que** les rainures (33) s'étendent seulement sur un segment substantiel, par exemple la moitié, de la longueur axiale de la tête d'extraction (18), ledit segment se trouvant dans une distance de l'orifice des passages (26) de la tête d'extraction (18).

14. Dispositif selon une quelconque des revendications 11 à 13, **caractérisé en ce que** la forme et la dimension d'une coupe en travers des rainures (33) diffèrent de la coupe en travers des passages (26) délimitées par les spires de vis de là tête d'extraction (18).

15. Dispositif selon une quelconque des revendications 11 à 15, **caractérisé en ce que** les rainures (33) ont une profondeur plus petite que les passages formées par les spires de la vis d'agglomération.

16. Procédé pour l'agglomération en continu de produits en matière plastique au moyens d'une vis d'agglomération entraînée à tourner autour son axe, qui exprime la matière agglomérée hors de son boîtier et a un rapport de la longueur effective au diamètre nominal plus petit que 16, **caractérisé en ce que** on effectue le remplissage du boîtier avec la matière à agglomérer en la fourrant, et que la vis d'agglomération, dont le rapport de la longueur effective au diamètre nominal est 4,5 à 12, agglomère la matière de manière considérable et la transporte à une tète d'extraction reliée, qui toume conjointement avec ladite vis d'agglomération et comprend des spires de vis, dont le nombre est plus grand que celui-ci de la vis d'agglomération, de manière que les spires de la tête d'extraction compriment et agglomèrent la matière ultérieurement et éjectent la matière agglomérée par plusieurs orifices de sortie situés à l'extrémité frontale du boîtier.

17. Procédé selon la revendication 16, **caractérisé en ce que** la matière agglomérée étant transportée par la tête d'extraction est soumise aux forces extrêmes de cisaillement.
